# EUROPEAN PATENT APPLICATION

(11) **EP 4 360 924 A1**
(43) Date of publication of application: **01.05.2024**
(21) Application number: 23205143.3
(22) Date of filing: 23.10.2023
(51) Int. Cl.: B60H 1/00

(54) **VEHICLE WITH AN AIR CONDITIONING DEVICE TO COOL ELECTRICAL DEVICES IN THE VEHICLE**

(30) Priority: 31.10.2022 IT 202200022353
(71) Applicant: FERRARI S.p.A., 41100 Modena (IT)
(72) Inventor: FAVARETTO, Fabrizio, 41100 Modena (IT)
(74) Representative: Studio Torta S.p.A.

(57) **Abstract**

A motor vehicle (1) includes at least one first electrical device (3) and a conditioning apparatus (2) to cool the first electrical device (3), the conditioning apparatus (2) comprising a refrigerant fluid circuit (4) configured to circulate a refrigerant fluid along a path (P) so as to realize a refrigeration cycle, the refrigerant fluid circuit (4) comprising along the path (P) a compressor (5), a condenser (6) to condense the refrigerant fluid compressed by the compressor (5), and an expansion valve device (7), wherein the first electrical device (3) is arranged in direct thermal contact with the refrigerant fluid circuit (4) at a first heat exchange zone (8) of the refrigerant fluid circuit downstream the expansion valve device (7), the refrigerant fluid circuit (4) having a first evaporator (9) configured to evaporate the refrigerant fluid passed through the expansion valve device (7) by heat exchange with the first electrical device (3) at the first heat exchange zone (8).

## Description

### CROSS-REFERENCE TO RELATED APPLICATIONS

This patent application claims priority from Italian patent application no. 102022000022353 filed on 31 October 2022, the entire disclosure of which is incorporated herein by reference.

### TECHNICAL FIELD

The invention concerns a motor vehicle having a conditioning apparatus for cooling electrical devices in the motor vehicle, such as, for example, a battery pack, an electric motor, one or more electrical power converters, and the like.

### PRIOR ART

A motor vehicle normally includes one or more electrical devices.

In particular, an electric motor vehicle, i.e., one having at least one electric motor, typically needs electrical devices that absorb or distribute a significant, or at least not a negligible, quantity of electricity, thus releasing heat during operation.

The heat corresponds to an increase in temperature of the electrical devices, which include the battery pack, the electric motor, and any electrical power converters.

The increase in temperature, if not controlled, may cause the devices to overheat. This, in turn, can entail these devices to malfunction or even be damaged.

In addition, the increase in temperature entails a disadvantage connected to a resulting increase in the electrical resistance of the devices, in turn corresponding to an additional increase in temperature and heat released.

Therefore, the heat issued is usually dissipated using a special conditioning apparatus including a cooling assembly, an additional heat exchanger, and a hydraulic circuit in thermal contact with the electrical devices that release the heat.

The cooling assembly supplies the additional heat exchanger with an evaporating fluid to withdraw heat from the liquid circulating in the hydraulic circuit.

The liquid thus cooled in the heat exchanger continues to circulate along the hydraulic circuit, reaching respective areas of heat exchange with the electrical devices, where the liquid absorbs the heat released by the electrical devices, thus lowering their temperature.

In general, there is a need to improve the known conditioning apparatuses to cool the electrical devices more, thus reducing their electrical resistance and, as a result, establishing a positive cycle wherein the quantity of heat to be dissipated decreases, like the energy expense and space necessary for effective operation of the conditioning apparatuses.

More specifically, there is, in fact, a need to reduce the weight, dimensions, as well as the cost of the known conditioning apparatuses.

One purpose of this invention is to satisfy at least one of the needs described above, preferably in a simple and reliable way.

### DESCRIPTION OF THE INVENTION

The purpose is achieved with a motor vehicle as defined in claim 1.

The dependent claims define particular embodiments of the invention.

### BRIEF DESCRIPTION OF THE DRAWINGS

Below, one embodiment of the invention will be described to better understand the same by way of non-limiting example and with reference to the attached drawings, wherein:
- Figure 1 is a diagram of a conditioning apparatus of a motor vehicle according to a particular embodiment of the invention,
- Figures 2-10 are diagrams of respective variants of the conditioning apparatus in Figure 1.

### EMBODIMENTS OF THE INVENTION

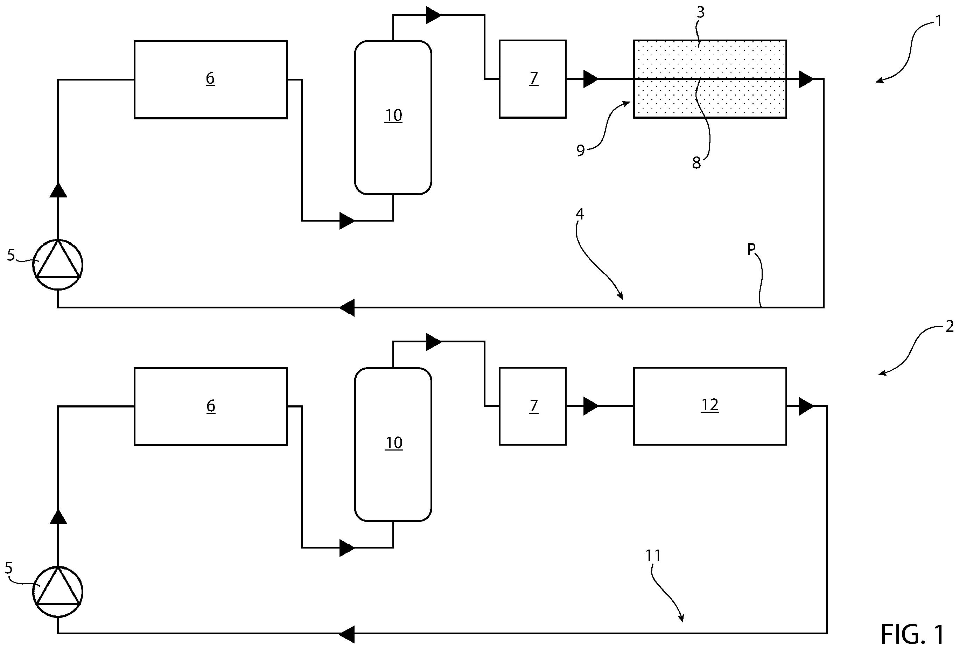

In Figure 1, the reference number 1 is used to indicate, as a whole, a vehicle, specifically a motor vehicle, in particular a sports or race car.

In reality, Figure 1 schematically shows just one conditioning apparatus 2 and one electrical device 3, which could also be considered part of the conditioning apparatus 2, of the motor vehicle 1.

The conditioning apparatus 2 is suitable for cooling the electrical device 3.

Without any loss of generality, the electrical device 3 could be, for example
- an electrical machine, such as an electric motor, or an alternator,
- an electricity storage device, such as a battery, a battery pack, a super condenser, or the like,
- an electrical circuit, in particular one comprising one or more power converters or static converters, such as an inverter, a rectifier, a fractionator, or the like.

The conditioning apparatus 2 comprises at least one refrigerant fluid circuit 4 configured to circulate a refrigerant fluid along a path P.

The circuit 4 is preferably a closed-loop circuit, so that the path P is a closed or closed-loop path. In other words, the refrigerant fluid circulates through the circuit 4 along the path P, preferably cyclically, i.e., repeating the path P several times, more precisely without ever leaving the circuit 4, at least ideally, i.e., without micro losses in the circuit 4 or other issues associated with circuit 4 maintenance or malfunctions, or even without resupplying or choosing to replace the refrigerant fluid.

During a cycle of the refrigerant fluid in the circuit 4 along the path P, the conditioning apparatus 2 implements a refrigeration cycle, in particular a Kelvin or compression refrigeration cycle.

Along the path P, the circuit 4 comprises
- a compressor 5 configured to compress the refrigerant fluid,
- a condenser 6 arranged downstream the compressor 5 and configured to condense the refrigerant fluid compressed by the compressor 5 via heat exchange with an additional fluid, for example air, more precisely, inside a motor compartment of the motor vehicle 1 or external air of the motor vehicle 1 suitably conveyed to the condenser 6,
- an expansion valve device 7 arranged downstream the condenser 6 and configured to produce a pressure drop on at least part of the refrigerant fluid condensed by the condenser 6, and
- a heat exchange zone 8 arranged downstream the valve 7, more precisely immediately or directly downstream the valve 7.

In addition, the circuit 4 preferably comprises a drier filter 10, for example a known one, arranged between the condenser 6 and the valve 7, i.e., downstream the condenser 6 or upstream of the valve 7.

The electrical device 3 is arranged in direct thermal contact with the circuit 4 at the zone 8. This means that, at the zone 8, the refrigerant fluid exchanges heat with the electrical device 3 directly through the circuit 4, for example through its tubes, i.e., without exchanging heat with an intermediate fluid, for example water, circulating through an additional circuit separate from the circuit 4, in particular an additional closed circuit.

The exchange of heat between the refrigerant fluid at the zone 8 with the electrical device 3 through the circuit 4 can be via conduction, for example by direct contact between the circuit 4 and the electrical device 3, or via convection.

For clarity, the meaning of direct thermal contact includes a thermal contact wherein the heat passes from the electrical device 3 to the refrigerant fluid at the zone 8 through a layer of air between the circuit 4 and the electrical device 3, more specifically air that is not forced through a specific circuit, but stagnant or randomly moving there.

The heat exchange zone 8 is conceptually part of an evaporator 9 of the circuit 4. The evaporator 9 is arranged downstream the valve 7 and is configured to evaporate the refrigerant fluid that passed through the valve 7 via heat exchange with the electrical device 3 at the zone 8.

Thus, during operation of the conditioning apparatus 2, the refrigerant fluid is compressed by the compressor 5. In this first step, the refrigerant fluid is compressed and heated in an aeriform state or, more precisely, in an overheated vapour state.

At this point, the second step, the refrigerant fluid crosses the condenser 6, undergoing a state transition from the aeriform state to the liquid state there.

In a third step, at least part of the refrigerant fluid passes through the valve 7; the pressure drop caused by the valve 7 causes the cooling of the refrigerant fluid and, potentially, an initial partial evaporation, so that the refrigerant fluid could be in a semi-liquid state, i.e., could contain a liquid part and an aeriform part.

In a fourth step, the refrigerant fluid, which has passed through the valve 7, evaporates at the zone 8 absorbing heat from the electrical device 3 and, thus, cooling the latter.

Thus, the evaporator 9 contributes at least to causing a state transition of the refrigerant fluid to the aeriform state.

Having absorbed heat from the electrical device 3 and, thus, being heated, the refrigerant fluid returns to the compressor 5 to repeat the steps described above.

A significant aspect of the above is that the refrigerant fluid undertakes or is in a phase or physical state transition from the liquid state to the aeriform state when it exchanges heat with the electrical device 3.

Therefore, the refrigerant fluid is suitable for evaporating when or while it is in thermal contact with the electrical device 3, i.e., with a device having a given temperature typical of its operation.

Advantageously, the electrical device 3 is entirely arranged within the circuit 4 at the zone 8. Therefore, the refrigerant fluid at the zone 8 enters directly into contact with the electrical device 3 or laps the latter along the circuit 4 or the path P.

According to a more specific example, when the electrical device 3 is a battery pack, i.e., it comprises multiple batteries, the refrigerant fluid at the zone 8 passes into the spaces or gaps between the batteries. In other words, the circuit 4 comprises channels for the passage of the refrigerant fluid between said spaces between the batteries.

Alternatively, or more specifically, the electrical device 3 comprises at least one conducting element for conducting electrical current, for example an electrical winding, a printed circuit, a power electronics component, and the like. The conducting element is arranged within the circuit 4 at the zone 8. Therefore, the refrigerant fluid at the zone 8 enters directly into contact with the conducting element or directly laps the conducting element along the circuit 4 or the path P.

An example of a conducting element for an electric motor may be a stator winding or a rotor winding.

An example of a conducting element for an inverter or, more generally, for a converter may be a power electronics circuit.

In other words, the conducting element is an element through which, in use, the electrical current effectively passes.

Thus, the electrical device 3 having the conducting element is configured to operate via an effective passage or a conduction of electrical current through the conducting element.

In other words, the electrical device 3 is configured so that an electrical current passes through the conducting element during the operation thereof (ergo, during the operation of the electrical device 3).

Again, in other words, the conducting element is configured to conduct the electrical current during the operation of the electrical device 3.

According to the embodiment in Figure 1, the conditioning apparatus 2 comprises an additional refrigerant fluid circuit 11.

The second circuit 11 is similar to the first circuit 4, so it will only be described in what distinguishes it from the first circuit 4. In particular, the evaporator 9 is replaced by another evaporator 12 configured to evaporate the refrigerant fluid via heat exchange with air inside the motor vehicle 1 passenger compartment.

In this way, the evaporator 12 or the circuit 11 conditions the passenger compartment.

In practice, the circuit 11 defines an air conditioning device configured to condition the motor vehicle 1 passenger compartment.

The circuits 11 and the circuit 4 are independent of each other. Therefore, the respective refrigerant fluids circulating along the circuits 4, 11 could be different.

The circuit 11 is not essential, so it may also be absent.

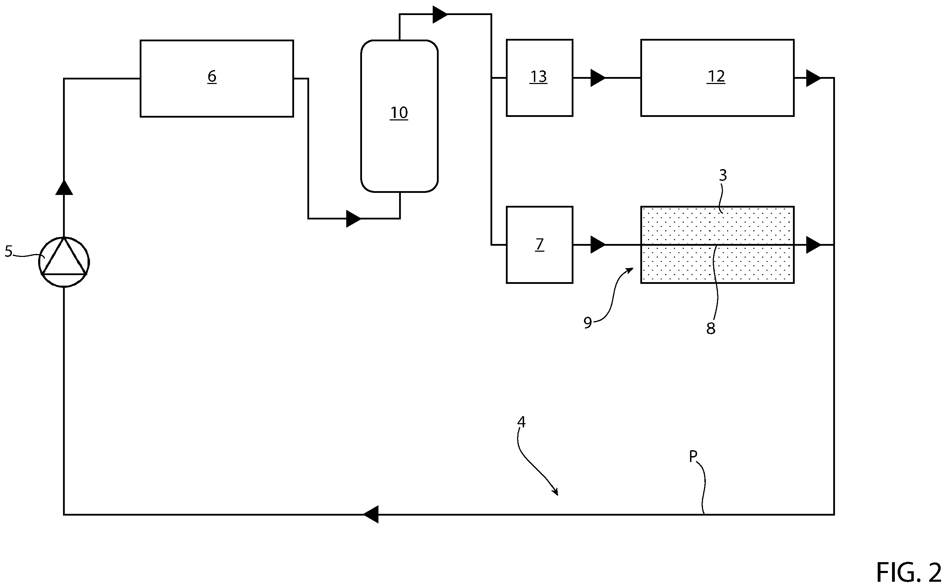

According to the embodiment in Figure 2, the circuits 4, 11 are combined together, i.e., the evaporator 12 becomes an integral part of the circuit 4 and it is arranged in parallel with the evaporator 9. The rest of the circuit 11 is removed.

Preferably, but not necessarily, the circuit 4 in Figure 2 comprises an additional expansion valve device 13 upstream of the evaporator 12 and downstream the condenser 6, i.e., between the condenser 6 and the evaporator 12.

In particular, the evaporator 12 is immediately or directly downstream the valve 13.

The valve 13 has the same function as the valve 7, i.e., it is configured to cause a pressure drop on part of the refrigerant fluid.

More precisely, the valves 7, 13 are arranged in parallel like the evaporators 9, 12, so that the valves 7, 13 are configured to produce corresponding pressure drops on two separate portions of the refrigerant fluid condensed by the condenser 6.

In other words, the refrigerant fluid coming from the condenser 6 is divided between the valves 7, 13 respectively, before reaching the zone 8 and the evaporator 12.

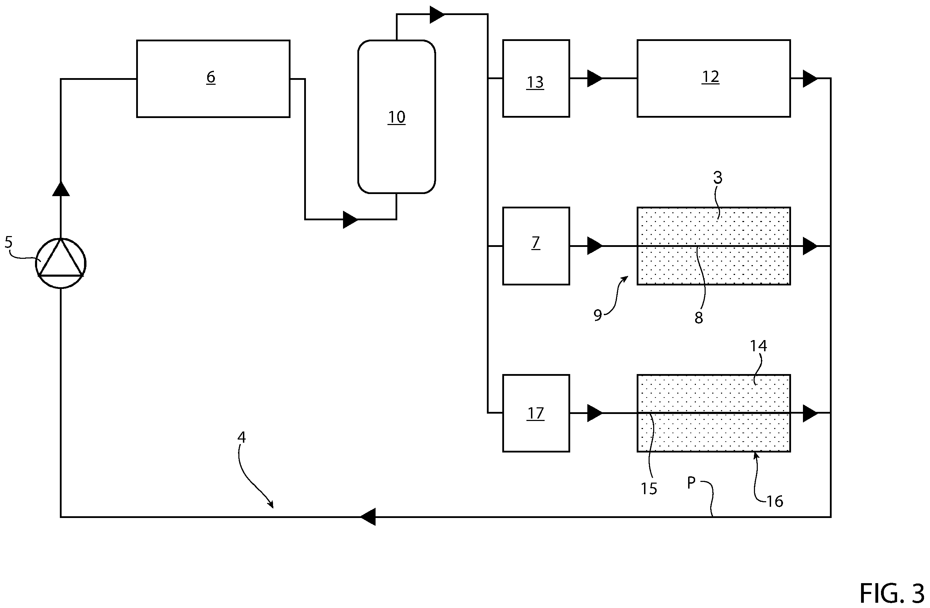

According to the variant in Figure 3, the motor vehicle 1 comprises an additional electrical device 14, which could be the same as the electrical device 3 or, for example, another type such as one of those already described here.

The electrical device 14 is arranged in direct thermal contact with the circuit 4 in another heat exchange zone 15 arranged in parallel with the first heat exchange zone 8.

The situation of the heat exchange zones 8, 15 is similar, so that the circuit 4 comprises, in addition, an evaporator 16 arranged in parallel with the evaporator 9 and configured to evaporate the refrigerant fluid passing through the evaporator 16 via heat exchange with the electrical device 14 in the heat exchange zone 15, thus contributing to causing the state transition of the refrigerant fluid to the aeriform state.

Preferably, but not necessarily, the circuit 4 also comprises an additional expansion valve device 17 upstream of the evaporator 16 and downstream the condenser 6, i.e., between the condenser 6 and the evaporator 16.

In particular, the evaporator 16 is immediately or directly downstream the valve 17.

The valve 17 has the same function as the valve 7, i.e., it is configured to cause a pressure drop on part of the refrigerant fluid.

More precisely, the valves 7, 17 are arranged in parallel like the evaporators 9, 16, so that the valves 7, 17 are configured to produce corresponding pressure drops on two separate portions of the refrigerant fluid condensed by the condenser 6.

In other words, the refrigerant fluid coming from the condenser 6 is divided between the valves 7, 17 respectively, before reaching the zones 8, 15.

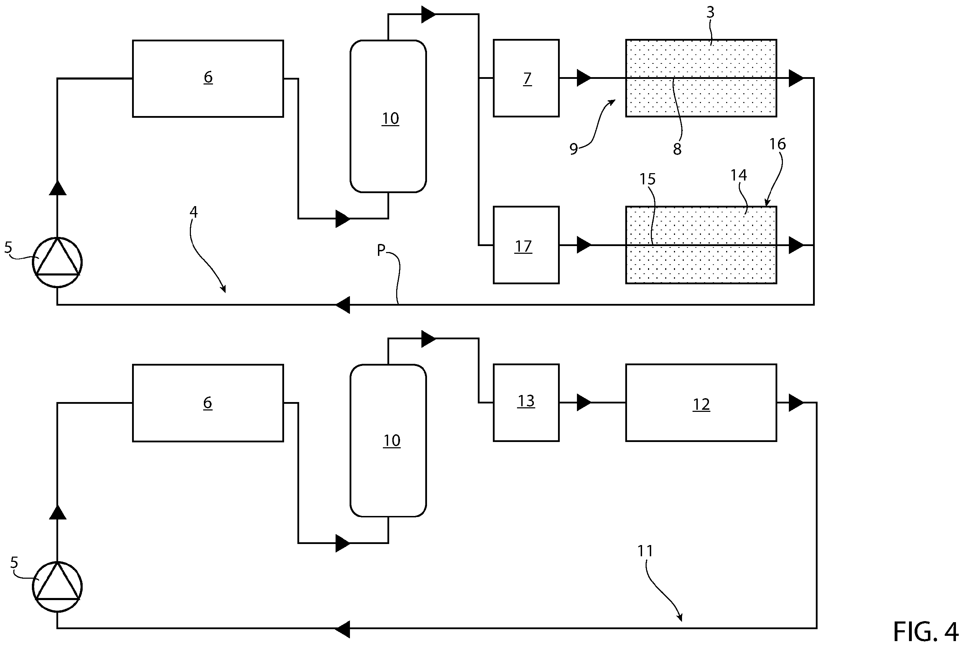

The presence of the evaporator 12 and the corresponding valve 13 is not necessary; in fact, in the variant in Figure 4, the circuit 11 is optionally present with the evaporator 12, while the latter is absent in the circuit 4.

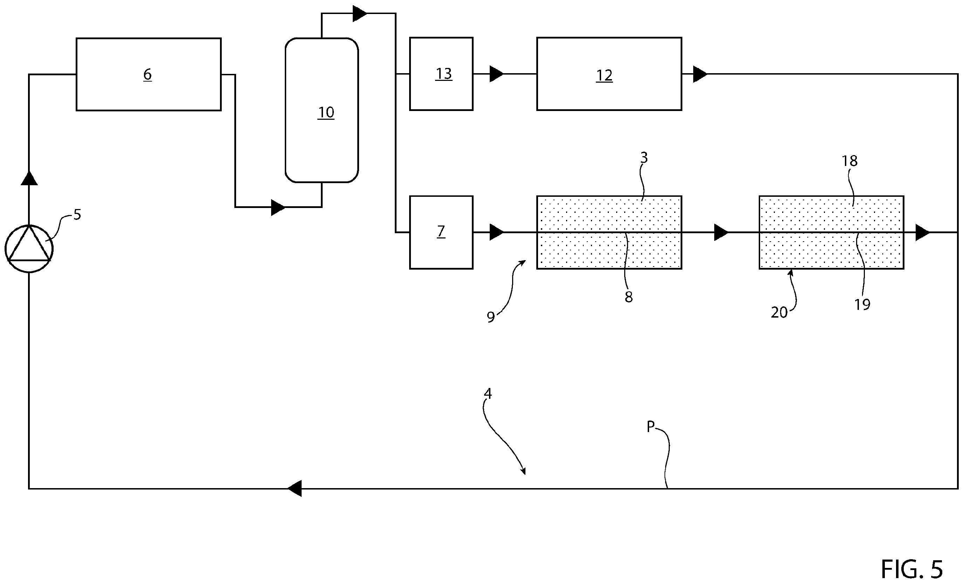

In the variant in Figure 5, the motor vehicle 1 comprises another electrical device 18, similarly to the electrical devices 3, 14. The electrical device 18 is arranged in direct thermal contact with the circuit 4 at another heat exchange zone 19 of the circuit 4 in series with the first zone 8. Therefore, similarly to what was described above, the circuit 4 comprises another evaporator 20 arranged in series with the evaporator 9 and configured to evaporate the refrigerant fluid that has passed through the evaporator 9 via heat exchange with the electrical device 18 at the zone 19, thus contributing to causing the state transition of the refrigerant fluid to the gaseous state.

In practice, the refrigerant fluid always evaporates more through the two evaporators 9, 20 in series, passing to the gaseous state. In the meantime, the refrigerant fluid sequentially cools the two electrical devices 3, 18.

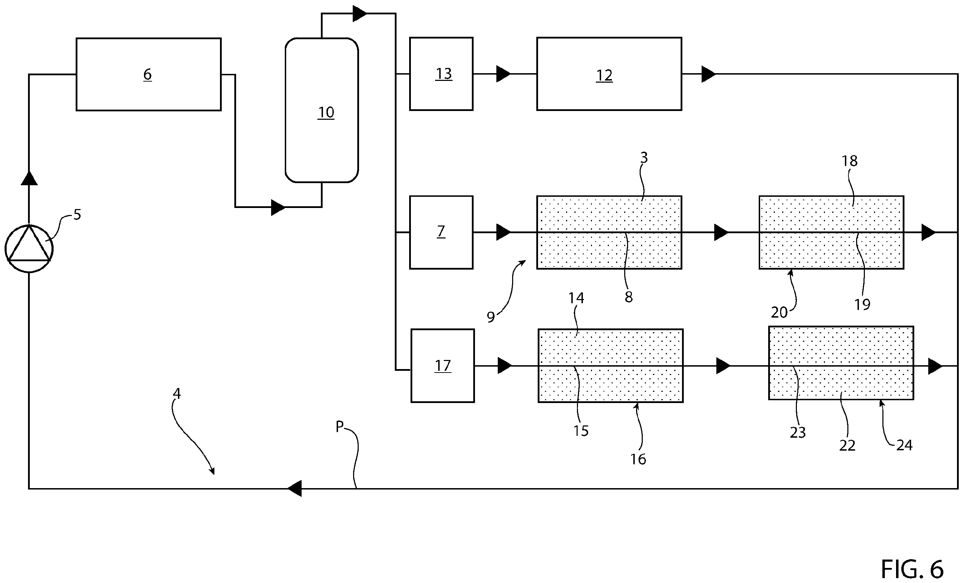

The variant in Figure 6 is a combination of the variant in Figure 4 with the variant in Figure 5, plus the optional addition of a further electrical device 22 in direct thermal contact with the circuit 4 at a heat exchange zone 23 arranged in series with the zone 15, similarly to the series of evaporators 9, 20 and/or zones 8, 19 in Figure 5, which are also shown in Figure 6 in the circuit 4. Thus, the circuit 4 comprises an evaporator 24 similar to the other evaporator 20 in parallel.

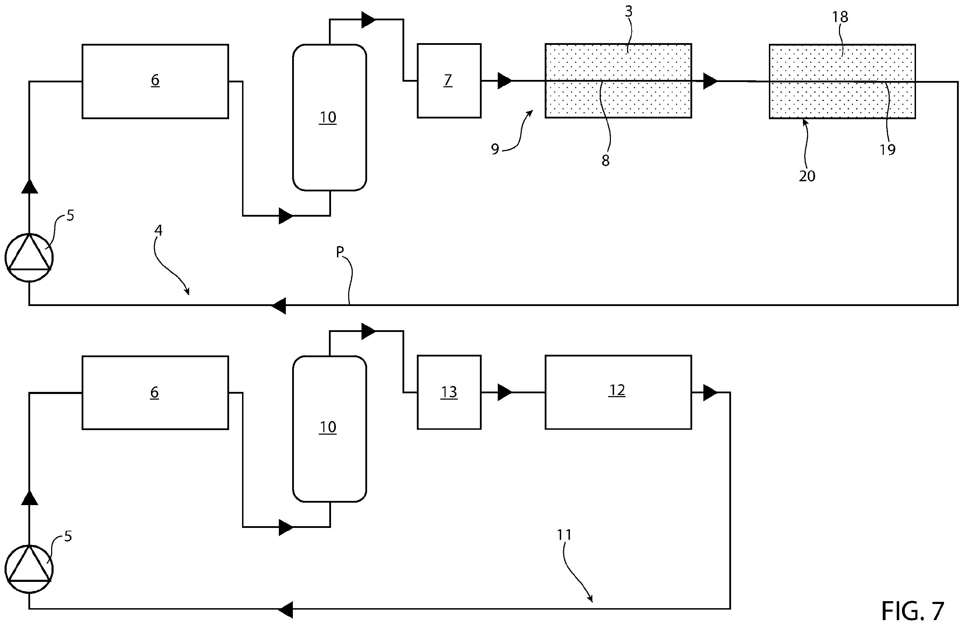

The variant in Figure 7 can be obtained starting from the variant in Figure 5, removing the evaporator 12 and the corresponding valve 13 from the circuit 4, plus the optional addition of the circuit 11.

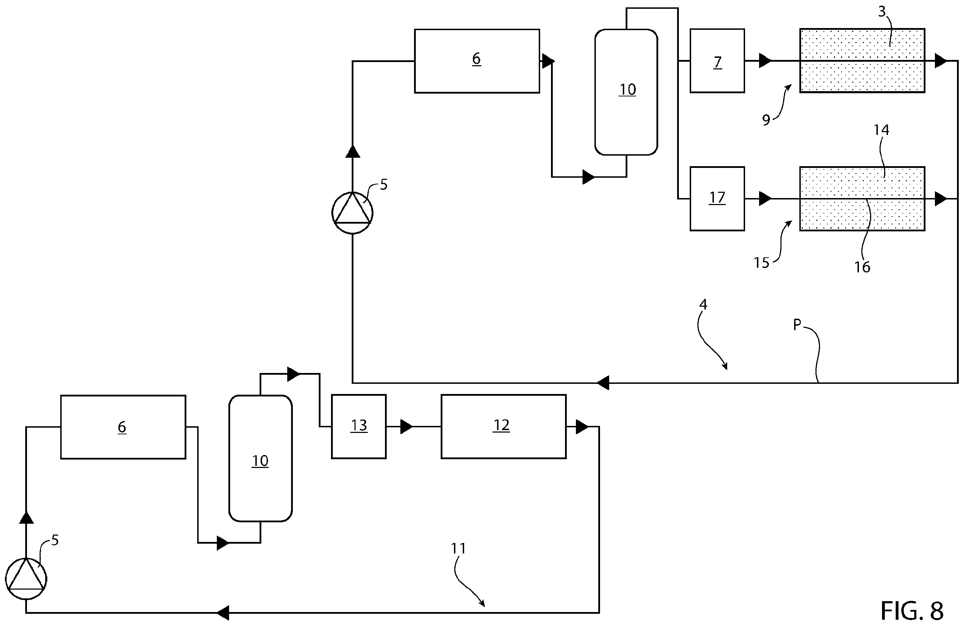

Similarly, the variant in Figure 8 can be obtained starting from the variant in Figure 3, removing the evaporator 12 and the corresponding valve 13 from the circuit 4, plus the optional addition of the circuit 11.

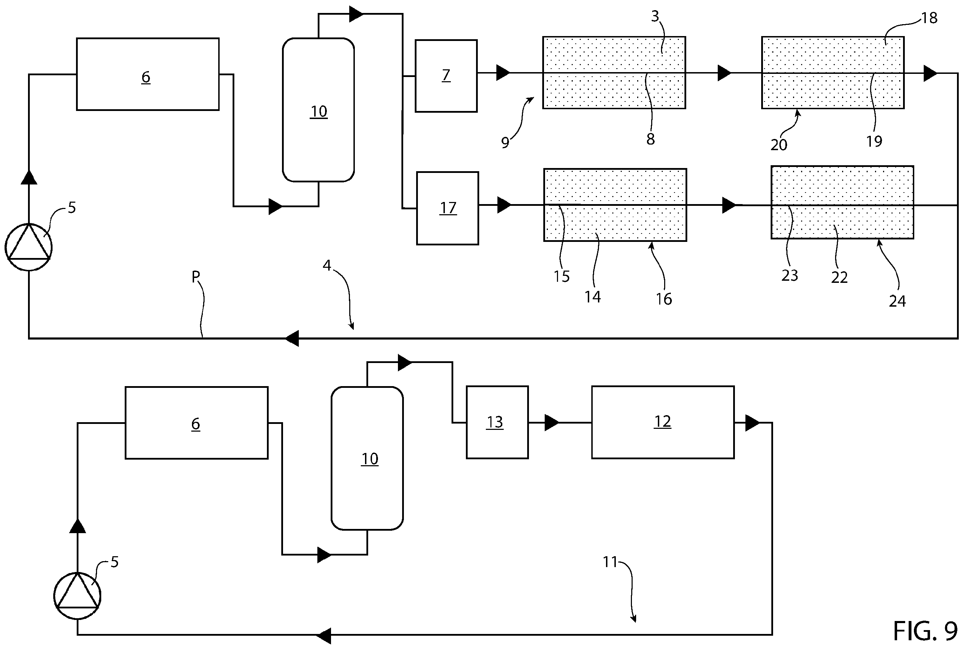

Again, similarly, the variant in Figure 9 can be obtained starting from the variant in Figure 6, removing the evaporator 12 and the corresponding valve 13 from the circuit 4, plus the optional addition of the circuit 11.

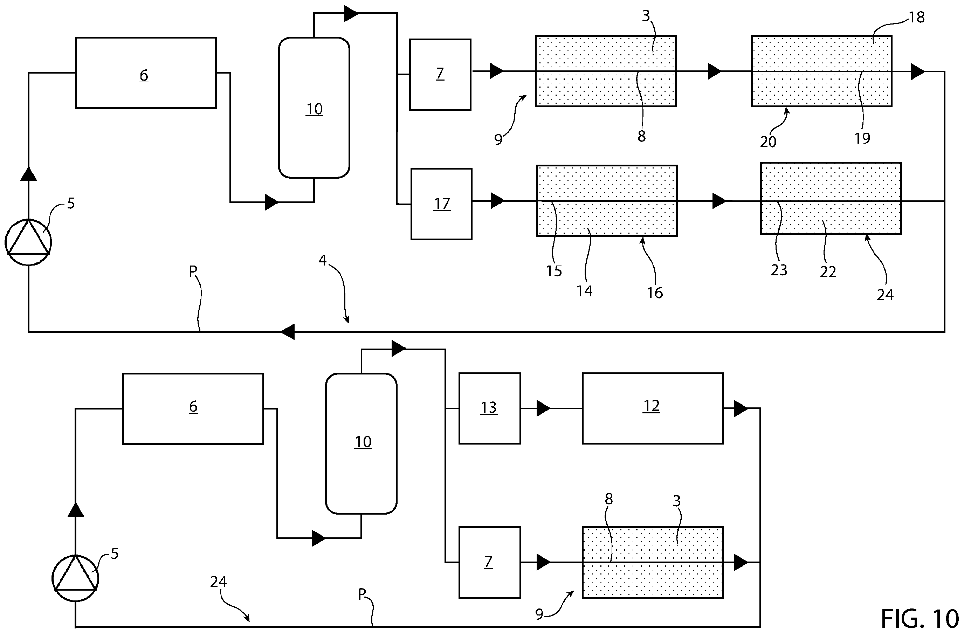

In addition, the variant in Figure 10 can be obtained by adding a circuit 24 identical to the circuit 4 in Figure 2 to the circuit 4 in Figure 9.

The refrigerant fluid preferably comprises an alkyl halide, for example a chlorofluorocarbon, in particular freon.

In addition, independently, the refrigerant fluid at room temperature has a resistivity greater than 1·10⁶ Ωm. "Room temperature" means a temperature between 15° and 30°, in particular 20°.

In addition, the refrigerant fluid at room temperature or, more precisely, at approximately 21°, has a liquid dielectric constant greater than 7.7.

The upper flammability limit of the refrigerant fluid is preferably less than 13% by volume in air. In addition, independently, the lower flammability limit of the refrigerant fluid is greater than 5% by volume in air.

In addition, the spontaneous ignition temperature of the refrigerant fluid is greater than 400°.

The invention also relates to a process for cooling any one or any set of electrical devices 3, 14, 18, 22.

The process comprises
- compression of the refrigerant fluid,
- condensation of the refrigerant fluid by heat exchange with an additional fluid, for example air,
- cooling of at least part of the condensed refrigerant fluid, in particular via one of the valves 7, 17, and
- evaporation of the refrigerant fluid cooled in the previous step, wherein the evaporation occurs via direct heat exchange with the corresponding electrical device immediately downstream between the devices 3, 14.

The refrigerant fluid preferably directly laps the electrical device with which it exchanges heat or laps one of its electrical energy conducting elements during evaporation.

In addition, the process may preferably comprise additional cooling of a portion of the condensed refrigerant fluid via the valve 13 and additional evaporation of the latter portion via heat exchange with the air inside the passenger compartment of the motor vehicle 1.

Conveniently, the process may comprise cooling in series of one of the devices 3, 14 and of the next one between the devices 18, 22 during evaporation via respective sequential heat exchanges between the refrigerant fluid and the corresponding heat exchange devices.

In addition, the process may comprise additional cooling in parallel of a portion of the condensed refrigerant fluid via the other valves 7, 17 and additional evaporation of the portion of the refrigerant fluid via direct heat exchange with the other of the devices 3, 14.

More generally, any aspect of the operation of the conditioning apparatus 2 may be part of the process according to the invention.

From the above, the advantages of the motor vehicle 1 and the process according to the invention are clear.

First of all, the circuits 4, 11 do not require maintenance except for specific breakdowns.

In addition, the direct use of the refrigerant fluid to cool the electrical devices 3, 14, 18, 22 during evaporation makes it possible to avoid the use of additional heat exchange fluids with consequent savings in weight, dimensions, and costs.

In addition, the refrigerant fluid has poor thermal conductivity, so it can effectively enter into direct contact with the conducting elements of the electrical devices 3, 14, 18, 22.

Again, cooling occurs much more effectively than in the prior art, with the consequent establishment of a positive recursive effect so that the electrical devices 3, 14, 18, 22 generate less and less heat thanks to the lower and lower temperatures, thus reducing, more and more, the quantity of refrigerant fluid needed for the conditioning.

Finally, it is clear that changes may be made to the overheating device according to the invention, and variations produced thereof, that, in any case, do not depart from the scope of protection defined by the claims.

In particular, each of the devices schematically represented in the figures is independent of the other details and is, specifically, devised to resolve specific technical problems in isolation to the other details.

## Claims

1. A motor vehicle (1) comprising at least a first electrical device (3) and a conditioning apparatus (2) to cool the first electrical device (3), the conditioning apparatus (2) comprising a refrigerant fluid circuit (4) configured to circulate a refrigerant fluid along a path (P) so as to realize a refrigeration cycle, the refrigerant fluid circuit (4) comprising along the path (P)
- a compressor (5) configured to compress the refrigerant fluid,
- a condenser (6) configured to condense the refrigerant fluid compressed by the compressor (5) by heat exchange with an additional fluid, thereby resulting in a first state transition of the refrigerant fluid from an aeriform state to a liquid state, and
- a first expansion valve device (7) configured to produce a pressure drop on at least part of the refrigerant fluid condensed from the condenser (6), thereby causing a cooling thereof,
**characterized by** the first electrical device (3) arranged in direct thermal contact with the refrigerant fluid circuit (4) at a first heat exchange zone (8) of the refrigerant fluid circuit downstream the first expansion valve device (7), the refrigerant fluid circuit (4) comprising a first evaporator (9) configured to evaporate the refrigerant fluid passed through the first expansion valve device (7) by heat exchange with the first electrical device (3) at the first heat exchange zone (8), thereby contributing to cause a second state transition of the refrigerant fluid to the aeriform state.

2. The motor vehicle according to claim 1, wherein the first electrical device (3) comprises a conducting element for conducting electric current, the conducting element being arranged within the refrigerant fluid circuit (4) at the first heat exchange zone (8), so as to be directly lapped by the refrigerant fluid along the refrigerant fluid circuit (4) .

3. The motor vehicle according to claim 1 or 2, wherein the first electrical device (3) is disposed entirely within the refrigerant fluid circuit (4) at the first heat exchange zone (8) so as to be directly lapped by the refrigerant fluid along the refrigerant fluid circuit (4).

4. The motor vehicle according to any one of the preceding claims, wherein the refrigerant fluid circuit (4) comprises a second expansion valve device (13) and a second evaporator (12) arranged in parallel with respect to the first expansion valve device (7) and the first evaporator (9), wherein the first and second expansion valve devices (7, 13) are configured to produce respective pressure drops on a first and a second portion of the refrigerant condensed by the condenser (6), and wherein the second evaporator (12) is configured to evaporate the second portion of the refrigerant by heat exchange with air inside a passenger compartment of the motor vehicle (1), thereby conditioning the passenger compartment.

5. The motor vehicle according to any one of the preceding claims, further comprising a third electrical device (18) arranged in direct thermal contact with the refrigerant fluid circuit (4) at a third heat exchange zone (19) of the refrigerant fluid circuit in series with respect to the first heat exchange zone (8), the refrigerant fluid circuit (4) comprising a third evaporator (20) arranged in series with respect to the first evaporator (9) and configured to evaporate the refrigerant fluid passed through the first evaporator (9) by heat exchange with the third electrical device (18) at the third heat exchange zone (19), thereby contributing to cause the second state transition.

6. The motor vehicle according to any one of the preceding claims, wherein the refrigerant fluid circuit (4) comprises a fourth expansion valve device (17) disposed in parallel with the first expansion valve device (7), the first and fourth expansion valve devices (7, 17) being configured to produce respective pressure drops on a third and a fourth portion of the refrigerant fluid condensed from the condenser (6), and wherein the vehicle (1) further comprises a fourth electrical device (14) arranged in direct thermal contact with the refrigerant fluid circuit (4) at a fourth heat exchange zone (15) of the refrigerant fluid circuit (4) downstream the fourth expansion valve device (17), the refrigerant fluid circuit (4) comprising a fourth evaporator (16) arranged in parallel with the first evaporator (9) and configured to evaporate the fourth portion of the refrigerant fluid by heat exchange with the fourth electrical device (14) at the fourth heat exchange zone (15), thereby contributing to cause the second state transition.

7. The motor vehicle according to any of the preceding claims, wherein the first electrical device (3) is one between an electrical energy storage device such as a battery or battery pack, a power converter such as an inverter, and an electrical machine such as an electric motor.

8. The motor vehicle according to any of the preceding claims in which the refrigerant fluid comprises an alkyl halide such as a chlorofluorocarbon, particularly freon.

9. The motor vehicle according to any of the preceding claims wherein the refrigerant fluid at room temperature has a resistivity greater than 1·10⁶ Ωm.

10. A process for cooling at least a first electrical device (3) of a motor vehicle (1), the process comprising an execution of a refrigeration cycle comprising
- a compression of a refrigerant fluid,
- a condensation of the refrigerant by heat exchange with an additional fluid,
- a cooling of at least part of the condensed refrigerant by a first expansion valve device (7) configured to produce a pressure drop on the refrigerant, and **characterized by**
- an evaporation of the refrigerant fluid which has been cooled through the first expansion valve device (7) by direct heat exchange with the first electrical device (3).

11. The process according to claim 10, wherein the refrigerant fluid directly laps onto the first electrical device (3) or onto an electrical energy conducting element thereof during evaporation.

12. The process according to claim 10 or 11, wherein the first expansion valve device causes cooling of a first portion of the condensed refrigerant fluid, the refrigeration cycle further comprising further cooling of a second portion of the condensed refrigerant fluid by means of a second expansion valve device (13) arranged in parallel with respect to the first expansion valve device (7) and configured to produce a further pressure drop on the second portion, wherein the refrigeration cycle further comprises a further evaporation of the second portion by heat exchange with air inside a passenger compartment of the motor vehicle (1), the further evaporation causing air conditioning of the passenger compartment.

13. The process according to any one of claims 10 to 12, wherein the refrigeration cycle comprises a sequential cooling of the first electric device (3) and a third electric device (18) during evaporation by respective sequential heat exchanges between the refrigerant fluid and the first electric device (3) and between the refrigerant fluid and the third electric device (18), respectively.

14. The process according to any one of claims 10 to 13, wherein the first expansion valve device (7) causes cooling of a third portion of the condensed refrigerant fluid, the refrigeration cycle further comprising a further cooling of a fourth portion of the condensed refrigerant by a fourth expansion valve device (17) arranged in parallel with the first expansion valve device (7) and configured to produce a further pressure drop on the fourth portion, and a further evaporation of the fourth portion by direct heat exchange with a fourth electrical device (14) of the motor vehicle (1) .
